# EUROPEAN PATENT APPLICATION

(11) **EP 4 762 902 A1**
(43) Date of publication of application: **24.06.2026**
(21) Application number: 25221803.7
(22) Date of filing: 09.12.2025
(51) Int. Cl.: A01C 23/00, A01M 7/00

(54) **SYSTEM AND METHOD FOR DETERMINING FLOW RATES OF LIQUID FERTILIZERS BACKGROUND**

(30) Priority: 17.12.2024 US 202463735185 P
(71) Applicant: Precision Planting LLC, Tremont, IL 61568 (US)
(72) Inventor: Vanhoever, Lucas, Fargo (US); Holder, Josiah, Fargo (US); Cederberg, Dan, Fargo (US)
(74) Representative: AGCO Intellectual Property Department

(57) **Abstract**

A measurement system (10) for determining a flow rate of agricultural fluids from an applicator implement such as a fertilizer applicator (12). The implement has a manifold (18) with an inlet (20) for receiving agricultural fluids from a tank (16) and several outlets for distributing the fluids to points along the length of the applicator. The measurement system measures the flow rate of fluids from at least one of the manifold outlets with a first pressure sensor (26) for sensing a pressure of the agricultural fluids at the manifold inlet; a second pressure sensor (28) for sensing a pressure of the agricultural fluids flowing out of the manifold outlet; and a controller (30) for calculating the mass flow rate of the agricultural fluids flowing from the outlet based at least partially on the pressure of the fluids at the inlet and the pressure of the fluids flowing out of the outlet.

## Description

### BACKGROUND

Liquid fertilizers, pesticides, and other agricultural fluids are often applied to crops and/or the soil in which they are grown with agricultural implements such as ammonia applicators. These implements receive agricultural fluids from tanks and then distribute the fluids across the length of the implements.

The application rates of the implements must be measured and controlled to ensure proper application amounts and to reduce waste and runoff. Application rates are typically measured with liquid flow meters, but such flow meters are often inaccurate, leading to improper application amounts. This is especially true for implements that employ manifolds for distributing liquid fertilizers to multiple ejection ports or runs.

Although it is relatively easy to measure the flow rate to a single inlet of a manifold, it is more difficult to accurately measure the flow from multiple outlets because some outlets may have higher or lower flow rates due to blockages, damaged valves, etc. This often leads to inconsistent flow rates to different runs, with too much fertilizer applied to some parts of a field and not enough fertilizer applied to other parts of the same field.

### SUMMARY OF THE INVENTION

Embodiments of the present invention provide a distinct advance in the art of applicator implements. More particularly, embodiments of the invention provide more effective methods and systems for measuring and controlling application rates of liquid fertilizers and other agricultural fluids from applicator implements.

One embodiment of the invention is a measurement system for determining a flow rate of agricultural fluids from an applicator implement such as a fertilizer applicator. The implement has a manifold with an inlet for receiving agricultural fluids from a tank or other source and several outlets or discharge ports for distributing the fluids to points along the length of the applicator.

An embodiment of the measurement system comprises: a first pressure sensor for sensing a pressure of the agricultural fluid at the manifold inlet; a second pressure sensor for sensing a pressure of the agricultural fluid at one of the manifold outlets; and a controller for calculating the mass flow rate of the agricultural fluid flowing from the outlet based at least partially on the pressure of the fluid at the inlet and the pressure of the fluid at the outlet.

Other embodiments of the measurement system may also comprise temperature sensors, density sensors, viscosity sensors, and/or gas-liquid ratio sensors for sensing these parameters at the manifold inlet and outlet. In these embodiments, the controller calculates the mass flow rate of the agricultural fluid flowing from the outlet based at least partially on these measured parameters as well as the measured pressures.

This summary is provided to introduce a selection of concepts in a simplified form that are further described below in the detailed description. This summary is not intended to identify key features or essential features of the claimed subject matter, nor is it intended to be used to limit the scope of the claimed subject matter. For example, although the summary describes use of the measurement system with an ammonia applicator, embodiments of the invention can be used with any agricultural implement or machine that applies agricultural fluids to crops or the soils in which they are grown. Other aspects and advantages of the current invention will be apparent from the following detailed description of the embodiments and the accompanying drawing figures.

### BRIEF DESCRIPTION OF DRAWING FIGURES

Embodiments of the current invention are described in detail below with reference to the attached drawing figures, wherein:
Fig. 1 is a block diagram depicting selected components of a measurement system constructed in accordance with embodiments of the present invention.
Fig. 2 is an image of an exemplary agricultural implement which may be monitored by the measurement system of the present invention, a tractor that pulls the implement, and fluid tanks that supply agricultural fluids to the implement.
Fig. 3 is a block diagram of selected components of the controller of the measurement system.
Fig. 4 is a schematic representation of a manifold of the agricultural implement and components of the measurement system.
Fig. 5 is flow diagram that illustrates selected steps in methods of the present invention and/or portions of computer programs of the invention.

The drawing figures do not limit the current invention to the specific embodiments disclosed and described herein. The drawings are not necessarily to scale, emphasis instead being placed upon clearly illustrating the principles of the invention.

### DESCRIPTION

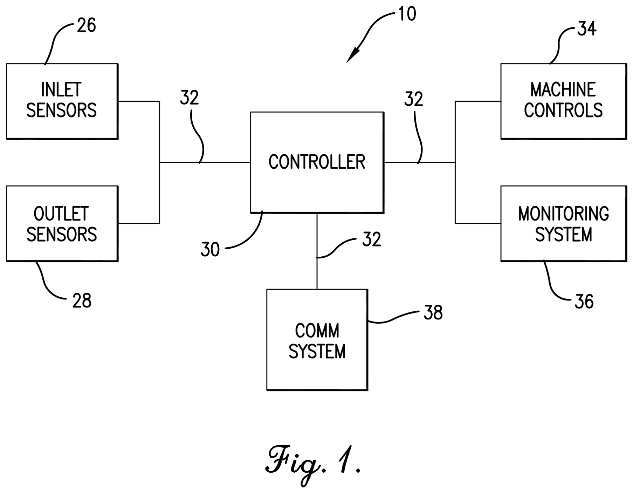

The present invention provides more effective systems and methods for measuring application rates of liquid fertilizers and other agricultural fluids. The agricultural fluids may be liquids or gases. As shown in Fig. 1, on embodiment of the invention is a measurement system 10 for measuring flow rates of agricultural fluids from agricultural implements.

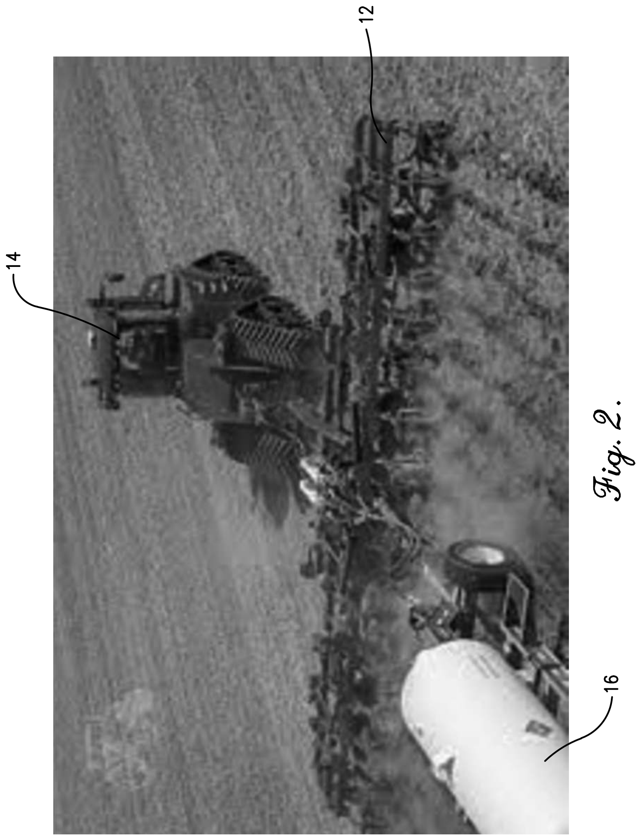

As shown in Fig. 2, embodiments of the measurement system 10 may be installed on or employed with a liquid fertilizer applicator 12 or similar agricultural implements. The illustrated applicator 12 is designed to be pulled across a field by a tractor 14 or other vehicle and receives ammonia or other liquid fertilizers from one or more tanks 16 that are also pulled by the tractor. The applicator includes a wheeled frame and at least one cutting knife for cutting a trench in soil traversed by the applicator. Ammonia or other liquid fertilizers are distributed to locations along the length of the applicator by a manifold 18 or similar device.

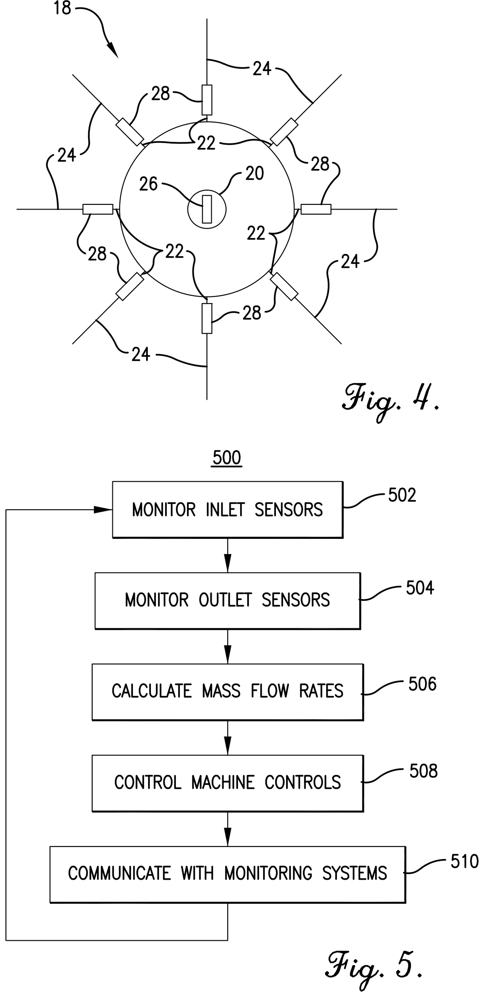

As depicted schematically in Fig. 4, the manifold 18 has an inlet 20 for receiving agricultural fluids from the tanks 16 and a number of outlets 22 for distributing the agricultural fluids to a number of tubes 24 or other fluid-carrying devices for delivering the fluids to locations in the soils disturbed by the cutting knives. The tubes 22 are sometimes referred to as "runs". The manifold 18 may also include appropriate ports, valves, etc. connected to the inlet and outlets. Because applicator implements are well known, more specific details of the construction and operation of the applicator will not be described in this application.

As shown in Figs. 1 and 4, an embodiment of the measurement system 10 comprises at least one inlet sensor 26 mounted on or near the inlet of the manifold, at least one outlet sensor 28 mounted on or near each outlet of the manifold to be monitored, and a controller 30 coupled with the sensors for determining a mass flow rate of agricultural fluids from each monitored outlet based on signals from the sensors. The controller and other of the measurement system may be enclosed in or supported on a weatherproof housing for protection from moisture, vibration, and impact. The housing may be positioned anywhere on the implement or the tractor and may be constructed from a suitable vibration and impact-resistant material such as, for example, plastic, nylon, aluminum, or any combination thereof and may include one or more appropriate gaskets or seals to make it substantially waterproof or resistant.

The inlet sensors 26 will now be described in more detail. These sensors measure parameters of the fluids delivered to the manifold. The sensors may measure pressure at the inlet of the manifold, inside the manifold, or upstream of the manifold, and in one embodiment, include a pressure sensor for sensing a pressure of the agricultural fluids delivered to the manifold inlet or the pressure within the manifold. The pressure sensor may be any device or combination of devices capable of measuring fluid pressures at the inlet or in the manifold. For example, the sensor may be a strain gauge sensor, a capacitive pressure sensor, a piezoelectric sensor, an optical pressure sensor, a hydraulic pressure sensor, an absolute pressure sensor, a gauge pressure sensor, a digital pressure sensor, a micro-electro-mechanical system (MEMS) pressure sensor, or any other pressure sensor type.

The inlet sensors 26 may also comprise a temperature sensor for sensing a temperature of the agricultural fluids at the manifold inlet. In still other embodiments, the sensors may include a density sensor for sensing a density of the agricultural fluids at the manifold inlet, a viscosity sensor for sensing a viscosity of the agricultural fluids at the manifold inlet, and/or a gas-liquid ratio sensor for sensing a gas-liquid ratio of the agricultural fluids at the manifold inlet. The measurement system may comprise just one of these sensor types or any combination of those sensors. For example, in one embodiment, the measurement system comprises only the pressure sensor. In another embodiments, the measurement system comprises the pressure sensor and the temperature sensor. In still other embodiments, the measurement system comprises the pressure sensor in combination with at least one of the other sensor types.

The outlet sensors 28 will now be described in more detail. These sensors are mounted to or near each manifold outlet to be monitored by the measurement system and measure parameters of the fluids discharged from the monitored outlets. The measurement system may monitor any number of the manifold outlets, and in one embodiment, monitors all of the manifold outlets. For simplicity, the sensors for just one monitored outlet will be described in detail. In one embodiment, these sensors include a pressure sensor for sensing a pressure of the agricultural fluid discharged from the outlet. The pressure sensor may be any device or combination of devices capable of measuring fluid pressures at the outlet. For example, the sensor may be a strain gauge sensor, a capacitive pressure sensor, a piezoelectric sensor, an optical pressure sensor, a hydraulic pressure sensor, an absolute pressure sensor, a gauge pressure sensor, a digital pressure sensor, a micro-electro-mechanical system (MEMS) pressure sensor, or any other pressure sensor type.

The outlet sensors 28 may also comprise a temperature sensor for sensing a temperature of the agricultural fluids discharged from the outlet. In still other embodiments, the sensors may include a density sensor for sensing a density of the agricultural fluids discharged from the outlet, a viscosity sensor for sensing a viscosity of the agricultural fluids discharged from the outlet, and/or a gas-liquid ratio sensor for sensing a gas-liquid ratio of the agricultural fluids discharged from the outlet. The measurement system may comprise just one of these sensor types or any combination of the sensors. For example, in one embodiment, the measurement system comprises only the pressure sensor, but in other embodiments, the measurement system comprises the pressure sensor in combination with other sensor types.

In some embodiments, the pressure sensors for the manifold inlet and monitored outlets may be part of a differential pressure sensor that measures liquid pressure at two or more spaced locations in or near the manifold. For example, a single differential pressure may measure the pressure differential between the fluids delivered to the manifold inlet and the fluids discharged from one of the manifold outlets.

The controller 30 will now be described in more detail. The controller receives data or signals from the inlet and outlet sensors 26, 28 via a data exchange network 32 and calculates the mass flow rate of agricultural fluids flowing from at least one outlet of the applicator implement based on these signals. For example, in one embodiment, the controller calculates the mass flow rate of fluids flowing from one of the manifold outlets based at least partially on the pressure of the fluids at the manifold inlet and the pressure of the fluids flowing out of the manifold outlet. In another embodiment, the controller calculates the mass flow rate of fluids flowing from one of the manifold outlets based at least partially on the pressure of the fluids at the manifold inlet and a known value related to anticipated pressure of the fluids at manifold outlet.

In another embodiment, the controller 30 calculates the mass flow rate of fluids flowing from the manifold outlet based at least partially on the pressure and the temperature of the fluids at the manifold inlet and the pressure and temperature of the fluids flowing out of the manifold outlet. In yet other embodiments of the invention, the controller calculates the mass flow rate of fluids flowing from the outlet based on any combination of the pressure, the temperature, the density, the viscosity, and the gas-liquid ratio of the fluids at the manifold inlet and any combination of the pressure, the temperature, the density, the viscosity, and the gas-liquid ratio pressure of the fluids flowing out the manifold outlet.

The controller 30 may apply a Bernoulli equation for these calculations if the measurement system only comprises pressure sensors. The controller may use combinations of a Bernoulli equation and other thermodynamic equations for these calculations if the measurement system comprises other sensor types in addition to the pressure sensors.

In some embodiments, the controller 30 provides data representative of the calculated flow rates and other sensor data and signals to machine controls 34 on the applicator implement, the tractor, and/or the tanks via the data exchange network 32. The machine controls may be valves, pumps, motors, and/or other devices on the applicator implement or the tractor which can control the speed of the tractor, the rate at which fluids are delivered to the manifold, or any other parameter that impacts the rate at which agricultural fluids are discharged from the implement. The data exchange network 32 may be a CAN network or any other network or data transmission path. The measurement system may trigger the machine controls to open or shut valves, change the speed of the tractor, and/or change the rate at which agricultural fluids are delivered to the implement based on the calculated fluid flow rates. For example, if the fluid flow rates out of the monitored manifold outlets are too low, the measurement system, or another control system that receives data or instructions from the measurement system, may trigger the machine controls to decrease the speed of the tractor, open valves, and/or increase the rate at which fertilizers are pumped to the manifold.

The controller 30 may also provide data representative of the calculated flow rates and other sensor data and signals to monitoring systems 36 via the data exchange network 32. The monitoring systems may be displays, gauges, indicator lights, and/or other devices on the applicator implement or the tractor which can indicate the measured flows rates.

The controller 30 may also provide data representative of the calculated flow rates and other sensor data and signals to a communication system 38 via the data exchange network 32. The communication system 38 may comprise any known communications equipment such a radio and/or cellular transceiver or modem. The communication system may transmit or otherwise deliver data from the controller to remote computer systems, monitoring systems, and/or other devices. In some embodiments, the controller and communications system may transmit sensor data to a remote computing device that calculates the flow rates and then sends corresponding data and or instructions back to the controller or another device on the implement or the tractor.

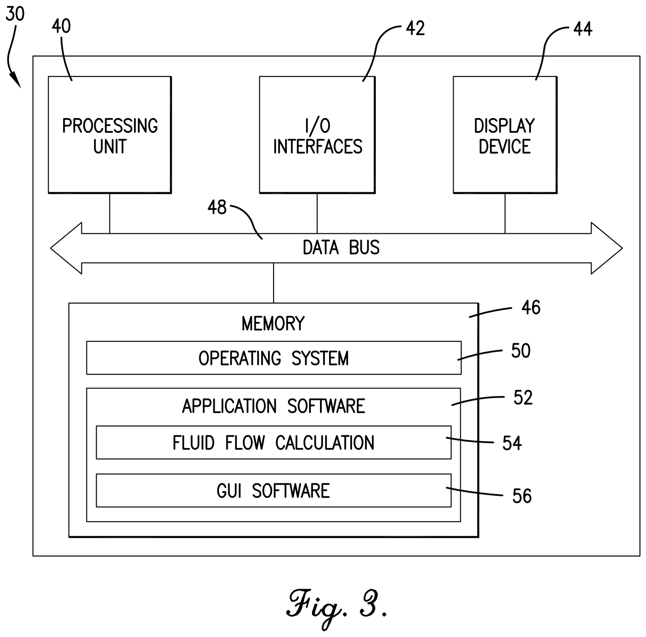

Fig. 3 illustrates an exemplary embodiment of the controller 30. The illustrated controller 30 is just one example of a device that may implement aspects of the present invention and may be replaced with another device and/or may have fewer or additional components than those illustrated. Moreover, some of the functionality associated with the various components depicted in Fig. 3 may be combined or distributed among additional modules or devices.

The controller 30 may be located on or near the applicator implement or the tractor or may be part of a remote computing system. The controller 30 may comprise any processing device or circuitry such as a processing unit 40, which may be a processor or any other logic device. The controller may also comprise input/output (I/O) interface(s) 42, a display device 44, and memory 46, all coupled to one or more data busses, such as data bus 48.

The memory 46 may include any one or a combination of volatile memory elements (e.g., random-access memory RAM, such as DRAM, and SRAM, etc.) and nonvolatile memory elements (e.g., ROM, hard drive, tape, CDROM, etc.). The memory 46 may store a native operating system 50 and one or more native applications, emulation systems, or emulated applications for any of a variety of operating systems and/or emulated hardware platforms, emulated operating systems, etc. In the embodiment depicted in Fig. 3, the memory 46 stores or otherwise accesses the operating system 50 and application software 52.

The application software 52 comprises, in one embodiment, fluid flow calculation software 54 and graphical user interface (GUI) software 56. In some embodiments, functionality of one or more of these software modules may be combined into a single software module, or further distributed according to additional modules in the memory 46 or other memory. In some embodiments, functionality for one or more of the software modules may be stored remotely. In some embodiments, a separate storage device (e.g., a non-transitory, computer readable storage medium) may be coupled to the data bus 48 (or the network 32), such as a persistent memory (e.g., optical, magnetic, and/or semiconductor memory and associated drives).

The fluid flow calculation software 54 performs many of the functions described herein. Namely it receives data from the sensors and determines the flow rate of fluids from at least one of the manifold outlets from the sensor data. The software may use any algorithms for performing these calculations.

The GUI software 56 provides feedback, alerts, and/or recommendations to an operator based on data received from the network 32 and/or from the software modules of the application software 52.

Execution of the software modules is implemented by the processing unit 30 under the management of the operating system 50. In some embodiments, the operating system 40 may be omitted and a more rudimentary manner of control implemented. The processing unit 40 may be embodied as a custom-made or commercially available processor, a central processing unit (CPU) or an auxiliary processor among several processors, a semiconductor based microprocessor (in the form of a microchip), a macroprocessor, one or more application specific integrated circuits (ASICs), a plurality of suitably configured digital logic gates, and/or other well-known electrical configurations comprising discrete elements both individually and in various combinations to coordinate the overall operation of the controller 30.

The I/O interfaces 42 provide one or more interfaces to the network 32, as well as interfaces for access to one or more computer readable mediums, such as memory drives, which includes an optical, magnetic, or semiconductor-based drive. The I/O interfaces 42 may comprise any number of interfaces for the input and output of signals (e.g., analog or digital data) for conveyance over the network 32. The input may comprise input by an operator (local or remote) through a keyboard or mouse or other input device (or audible input in some embodiments), and input from signals carrying information from one or more of the components of the control system 10.

The display device 44 comprises one of a variety of types of displays, including liquid crystal diode (LCD), plasma, among others, that provide an outputted GUI to the operator as indicated above. In some embodiments, the display device 44 may be a headset-type display with or without an audio component. In some embodiments, the display device 44 may be accessed by the processing unit 40 via the network 32.

When certain embodiments of the controller 30 are implemented at least in part as software (including firmware), the software can be stored on a variety of non-transitory computer-readable medium for use by, or in connection with, a variety of computer-related systems or methods. In the context of this document, a computer-readable medium may comprise an electronic, magnetic, optical, or other physical device or apparatus that may contain or store a computer program (e.g., executable code or instructions) for use by or in connection with a computer-related system or method. The software may be embedded in a variety of computer-readable mediums for use by, or in connection with, an instruction execution system, apparatus, or device, such as a computer-based system, processor-containing system, or other system that can fetch the instructions from the instruction execution system, apparatus, or device and execute the instructions.

When certain embodiment of the controller 30 are implemented at least in part as hardware, such functionality may be implemented with any or a combination of the following technologies, which are all well-known in the art: a discreet logic circuit(s) having logic gates for implementing logic functions upon data signals, an application specific integrated circuit (ASIC) having appropriate combinational logic gates, a programmable gate array(s) (PGA), a field programmable gate array (FPGA), etc.

One or more of the process descriptions or blocks in the flow diagram of Fig. 5 should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

Each software module may comprise an ordered listing of executable instructions for implementing logical functions and can be embodied in any computer-readable medium for use by or in connection with an instruction execution system, apparatus, or device, such as a computer-based system, processor-containing system, or other system that can fetch the instructions from the instruction execution system, apparatus, or device, and execute the instructions. In the context of this application, a "computer-readable medium" can be any means that can contain, store, communicate, propagate or transport the program for use by or in connection with the instruction execution system, apparatus, or device including, but not limited to, the memory 46.

The flow chart of Fig. 5 shows the functionality and operation of an exemplary implementation of the present invention in more detail. In this regard, some of the blocks of the flow chart may represent method steps and/or a module segment or portion of code of the computer programs of the present invention. In some alternative implementations, the functions noted in the various blocks may occur out of the order depicted in Fig. 5. For example, two blocks shown in succession in Fig. 5 may in fact be executed substantially concurrently, or the blocks may sometimes be executed in the reverse order depending upon the functionality involved.

As shown in blocks 502 and 504, the controller 30 receives sensor data from the sensors 26, 28. As discussed above, the sensor data may be fluid pressure data, fluid temperature data, fluid density data, fluid viscosity data, and gas-liquid ratio data.

The controller 30 then calculates the mass flow rate of fluids from at least one of the monitored manifold outlets based on the data from the sensors as shown in block 506. In one embodiment, the controller calculates the mass flow rate of fluids flowing from one of the manifold outlets based at least partially on the pressure of the fluid near at the manifold inlet and the pressure of the fluid flowing out of the manifold outlet. In another embodiment, the controller calculates the mass flow rate of fluids flowing from the manifold outlet based at least partially on the pressure and the temperature of the fluid near or at the manifold inlet and the pressure and temperature of the fluid flowing out of the manifold outlet. In yet other embodiments, the controller calculates the mass flow rate of fluids flowing from the outlet based on any combination of the pressure, the temperature, the density, the viscosity, and the gas-liquid ratio of the fluid near or at the manifold inlet and any combination of the pressure, the temperature, the density, the viscosity, and the gas-liquid ration pressure of the fluid flowing out the manifold outlet.

The controller may also send data to the machine controls, the monitoring devices, and/or other devices as depicted in block 508. The controller may also send data to the monitoring systems as depicted in block 510.

### ADDITIONAL CONSIDERATIONS

The detailed description of the technology references the accompanying drawings that illustrate specific embodiments in which the technology can be practiced. The embodiments are intended to describe aspects of the technology in sufficient detail to enable those skilled in the art to practice the technology. Other embodiments can be utilized, and changes can be made without departing from the scope of the current invention. The detailed description is, therefore, not to be taken in a limiting sense. The scope of the current invention is defined only by the appended claims, along with the full scope of equivalents to which such claims are entitled.

Throughout this specification, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments but is not necessarily included. Thus, the current invention can include a variety of combinations and/or integrations of the embodiments described herein.

Although the present application sets forth a detailed description of numerous different embodiments, it should be understood that the legal scope of the description is defined by the words of the claims set forth at the end of this patent and equivalents. The detailed description is to be construed as exemplary only and does not describe every possible embodiment since describing every possible embodiment would be impractical. Numerous alternative embodiments may be implemented, using either current technology or technology developed after the filing date of this patent, which would still fall within the scope of the claims. For example, although the present invention is particularly useful in calculating the flow rates of ammonia from runs of an ammonia applicator, it may also be used to calculate the flow rates of other agricultural fluids such as other liquid fertilizers, liquid-based pesticides, liquid-based herbicides, or any other liquids applied to crops and/or the soil in which crops are grown.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of routines, subroutines, applications, or instructions. These may constitute either software (e.g., code embodied on a machine-readable medium or in a transmission signal) or hardware. In hardware, the routines, etc., are tangible units capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as computer hardware that operates to perform certain operations as described herein.

In various embodiments, computer hardware, such as a processing element, may be implemented as special purpose or as general purpose. For example, the processing element may comprise dedicated circuitry or logic that is permanently configured, such as an application-specific integrated circuit (ASIC), or indefinitely configured, such as an FPGA, to perform certain operations. The processing element may also comprise programmable logic or circuitry (e.g., as encompassed within a general-purpose processor or other programmable processor) that is temporarily configured by software to perform certain operations. It will be appreciated that the decision to implement the processing element as special purpose, in dedicated and permanently configured circuitry, or as general purpose (e.g., configured by software) may be driven by cost and time considerations.

Accordingly, the terms "processing unit", "processing element", or equivalents should be understood to encompass a tangible entity, be that an entity that is physically constructed, permanently configured (e.g., hardwired), or temporarily configured (e.g., programmed) to operate in a certain manner or to perform certain operations described herein. Considering embodiments in which the processing element is temporarily configured (e.g., programmed), each of the processing elements need not be configured or instantiated at any one instance in time. For example, where the processing element comprises a general-purpose processor configured using software, the general-purpose processor may be configured as respective different processing elements at different times. Software may accordingly configure the processing element to constitute a particular hardware configuration at one instance of time and to constitute a different hardware configuration at a different instance of time.

Computer hardware components, such as communication elements, memory elements, processing elements, and the like, may provide information to, and receive information from, other computer hardware components. Accordingly, the described computer hardware components may be regarded as being communicatively coupled. Where multiple of such computer hardware components exist contemporaneously, communications may be achieved through signal transmission (e.g., over appropriate circuits and buses) that connect the computer hardware components. In embodiments in which multiple computer hardware components are configured or instantiated at different times, communications between such computer hardware components may be achieved, for example, through the storage and retrieval of information in memory structures to which the multiple computer hardware components have access. For example, one computer hardware component may perform an operation and store the output of that operation in a memory device to which it is communicatively coupled. A further computer hardware component may then, at a later time, access the memory device to retrieve and process the stored output. Computer hardware components may also initiate communications with input or output devices, and may operate on a resource (e.g., a collection of information).

The various operations of example methods described herein may be performed, at least partially, by one or more processing elements that are temporarily configured (e.g., by software) or permanently configured to perform the relevant operations. Whether temporarily or permanently configured, such processing elements may constitute processing element-implemented modules that operate to perform one or more operations or functions. The modules referred to herein may, in some example embodiments, comprise processing element-implemented modules.

Similarly, the methods or routines described herein may be at least partially processing element implemented. For example, at least some of the operations of a method may be performed by one or more processing elements or processing element-implemented hardware modules. The performance of certain of the operations may be distributed among the one or more processing elements, not only residing within a single machine, but deployed across a number of machines. In some example embodiments, the processing elements may be located in a single location (e.g., within a home environment, an office environment or as a server farm), while in other embodiments the processing elements may be distributed across a number of locations.

Unless specifically stated otherwise, discussions herein using words such as "processing," "computing," "calculating," "determining," "presenting," "displaying," or the like may refer to actions or processes of a machine (e.g., a computer with a processing element and other computer hardware components) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

The patent claims at the end of this patent application are not intended to be construed under 35 U.S.C. § 112(f) unless traditional means-plus-function language is expressly recited, such as "means for" or "step for" language being explicitly recited in the claim(s).

Although the technology has been described with reference to the embodiments illustrated in the attached drawing figures, it is noted that equivalents may be employed and substitutions made herein without departing from the scope of the technology as recited in the claims.

Having thus described various embodiments of the technology, what is claimed as new and desired to be protected by Letters Patent includes the following:

## Claims

1. A measurement system for measuring a flow rate of agricultural fluids from an applicator implement having at least one fluid inlet and at least one fluid outlet, the system comprising:
a first pressure sensor for sensing a pressure of the agricultural fluids at the fluid inlet;
a second pressure sensor for sensing a pressure of the agricultural fluids flowing out of the fluid outlet; and
a controller for calculating the flow rate of the agricultural fluids flowing from the fluid outlet based at least partially on the pressure of the fluids at the fluid inlet and the pressure of the fluids flowing out of the fluid outlet.

2. The system as set forth in claim 1, further comprising:
a first temperature sensor for sensing a temperature of the agricultural fluids at the fluid inlet;
a second temperature sensor for sensing a temperature of the agricultural fluids flowing out of the fluid outlet; and
wherein the controller calculates the flow rate of the agricultural fluids flowing from the fluid outlet based at least partially on the pressure of the fluids at the fluid inlet, the pressure of the fluids flowing out of the fluid outlet, the temperature of the fluid at the fluid inlet, and the temperature of the fluids flowing out of the fluid outlet.

3. The system as set forth in claim 1, wherein the first pressure sensor and the second pressure sensor are separate sensors.

4. The system as set forth in claim 1, wherein the first pressure sensor and the second pressure sensor are part of a differential pressure sensor.

5. The system as set forth in claim 1, wherein the controller further generates a signal representative of the flow rate of the agricultural fluids flowing from the fluid outlet and transmits the signal to a control device on the applicator implement for controlling the flow of the agricultural fluids to the fluid inlet.

6. The system as set forth in claim 1, further comprising:
a first density sensor for sensing a density of the agricultural fluids at the fluid inlet;
a second density sensor for sensing a density of the agricultural fluids flowing out of the fluid outlet;
a first viscosity sensor for sensing a viscosity of the agricultural fluids at the fluid inlet;
a second viscosity sensor for sensing a viscosity of the agricultural fluids flowing out of the fluid outlet
a first gas-liquid ratio sensor for sensing a gas-liquid ratio of the agricultural fluids at the fluid inlet;
a second gas-liquid ratio sensor for sensing a gas-liquid ratio of the agricultural fluids flowing out of the fluid outlet; and
wherein the controller calculates the flow rate of the agricultural fluids flowing from the fluid outlet based at least partially on the pressure of the fluids at the fluid inlet, the pressure of the fluids flowing out of the fluid outlet, the temperature of the fluids at the fluid inlet, the temperature of the fluids flowing out of the fluid outlet, the density of the fluids at the fluid inlet, the density of the fluids flowing out of the fluid outlet, the viscosity of the fluids at the fluid inlet, the viscosity of the fluids flowing out of the fluid outlet, the gas-liquid ratio of the fluids at the fluid inlet, and the gas-liquid ratio of the fluids flowing out of the fluid outlet

7. The system as set forth in claim 1, further comprising a communication system for receiving from the controller data representative of the flow rate of the agricultural fluids flowing from the fluid outlet and transmitting the data to a remote computer system.

8. The system as set forth in claim 1, wherein the applicator implement is a liquid fertilizer applicator and the agricultural fluids are a liquid fertilizer.

9. A method for determining a flow rate of agricultural fluids from an applicator implement, the method comprising:
sensing a pressure of the agricultural fluids at a fluid inlet of the applicator implement;
sensing a pressure of the agricultural fluids flowing out of a fluid outlet of the applicator implement; and
calculating, with a controller, the flow rate of the agricultural fluids flowing from the fluid outlet based at least partially on the pressure of the fluids near at the fluid inlet and the pressure of the fluids flowing out of the fluid outlet.

10. The method as set forth in claim 9, further comprising:
sensing a temperature of the agricultural fluids at the fluid inlet;
sensing a temperature of the agricultural fluids flowing out of the fluid outlet; and
calculating, with the controller, the flow rate of the agricultural fluids flowing from the fluid outlet based at least partially on the pressure of the fluids near at the fluid inlet, the pressure of the fluids flowing out of the fluid outlet, the temperature of the fluids at the fluid inlet, and the temperature of the fluids flowing out of the fluid outlet.

11. The method as set forth in claim 9, further comprising generating, with the controller, a signal representative of the flow rate of the agricultural fluids flowing from the fluid outlet and transmitting the signal from the controller to a control device on the applicator implement for controlling the flow of the agricultural fluids to the fluid inlet.

12. The method as set forth in claim 10, further comprising:
sensing a density of the agricultural fluids at the fluid inlet;
sensing a density of the agricultural fluids flowing out of the fluid outlet;
sensing a viscosity of the agricultural fluids at the fluid inlet;
sensing a viscosity of the agricultural fluids flowing out of the fluid outlet sensing a gas-liquid ratio of the agricultural fluids at the fluid inlet;
sensing a gas-liquid ratio of the agricultural fluids flowing out of the fluid outlet; and
calculating, with the controller, the flow rate of the agricultural fluids flowing from the fluid outlet based at least partially on the pressure of the fluids at the fluid inlet, the pressure of the fluids flowing out of the fluid outlet, the temperature of the fluids at the fluid inlet, the temperature of the fluids flowing out of the fluid outlet, the density of the fluids at the fluid inlet, the density of the fluids flowing out of the fluid outlet, the viscosity of the fluid at the fluid inlet, the viscosity of the fluids flowing out of the fluid outlet, the gas-liquid ratio of the fluids at the fluid inlet, and the gas-liquid ratios of the fluid flowing out of the fluid outlet.

13. An agricultural implement comprising:
a wheeled frame;
at least one knife supported on the frame for cutting a trench in soil traversed by the agricultural implement;
a fluid inlet for receiving agricultural fluids;
a fluid outlet for distributing the agricultural fluids near the knife so as to apply the agricultural fluids into the trench formed by the knife;
a first pressure sensor for sensing a pressure of the agricultural fluids at the fluid inlet;
a second pressure sensor for sensing a pressure of the agricultural fluids flowing out of the fluid outlet; and
a controller for calculating the flow rate of the agricultural fluids flowing from the fluid outlet based at least partially on the pressure of the fluids near at the fluid inlet and the pressure of the fluids flowing out of the fluid outlet.

14. The agricultural implement as set forth in claim 13, further comprising:
a first temperature sensor for sensing a temperature of the agricultural fluids at the fluid inlet;
a second temperature sensor for sensing a temperature of the agricultural fluids flowing out of the fluid outlet; and
wherein the controller calculates the flow rate of the agricultural fluids flowing from the fluid outlet based at least partially on the pressure of the fluids near at the fluid inlet, the pressure of the fluids flowing out of the fluid outlet, the temperature of the fluids at the fluid inlet, and the temperature of the fluids flowing out of the fluid outlet.
